# EUROPEAN PATENT APPLICATION

(11) **EP 1 829 666 A1**
(43) Date of publication of application: **05.09.2007**
(21) Application number: 05737182.5
(22) Date of filing: 02.05.2005
(51) Int. Cl.: B29C 47/14, B29C 47/04, B29C 47/56, B29C 47/88, B29C 47/08, B29L 7/00

(54) **PROCESS FOR PRODUCING NONSTRETCHED FILM, PROCESS FOR PRODUCING RESIN COATED METAL PLATE, AND APPARATUS FOR PRODUCING NONSTRETCHED FILM**

(30) Priority: 10.12.2004 JP 2004357638
(71) Applicant: Toyo Kohan Co., Ltd., Tokyo 102-8447 (JP)
(72) Inventor: INAZAWA, Hiroshi, c/o TOYO KOHAN CO., LTD., Kudamatsu-shi, Yamaguchi 7448611 (JP); NAKAMURA, Takuji, c/o TOYO KOHAN CO., LTD., Kudamatsu-shi, Yamaguchi 7448611 (JP); HORITA, Tatsuya, c/o TOYO KOHAN CO., LTD., Kudamatsu-shi, Yamaguchi 7448611 (JP); YAMAMOTO, Yuichi, c/o TOYO KOHAN CO., LTD., Kudamatsu-shi, Yamaguchi 7448611 (JP)
(74) Representative: Vossius & Partner
(86) International application number: PCT/JP2005/008287
(87) International publication number: WO 2006/061920

(57) **Abstract**

The present invention provides a process for producing a nonstretched film formed of a thermoplastic resin, and an apparatus for producing a nonstretched film formed of a thermoplastic resin. In this production process, a thermoplastic resin A to be formed into a nonstretched film, and another thermoplastic resin B different from the thermoplastic resin A are melted by heating separately from each other and are led to both ends of an extrusion T die, followed by discharging and extrusion of the melted thermoplastic resin A onto a casting roller and thermoplastic resin B in such a manner that the thermoplastic resin B coexists with the thermoplastic resin A on both sides of the heat-melted thermoplastic resin A thus forming a nonstretched film. A cross-sectional shape of the holes B3a (B3b) formed in both sides of the lower portions of the melted-resin-supply tubes for supplying the thermoplastic resin A is configured such that an elliptical shape which has a long axis thereof arranged parallel to the flow direction of the heat-melted resin and a short axis thereof arranged perpendicular to the flow direction of the heat-melted resin has an approximately upper half portion thereof closed and a projection B5 is formed on a closed portion B4 whereby concave-and-convex streaks are formed on boundary portions between the thermoplastic resin A to be formed into a nonstretched film and the thermoplastic resin B.

## Description

### Technical Field

The present invention relates to a process for producing a nonstretched film made of a thermoplastic resin, a process for producing a resin coated metal plate by coating thermoplastic resins in a stacked manner, and an apparatus for producing a nonstretched film made of a thermoplastic resin.

### Background Art

As a film which is made of a thermoplastic resin, there has been known a nonstretched film which is formed such that a resin melted by heating in the inside of an extruder is discharged from a T-die and is extruded onto a casting roller and is directly wrapped around the casting roller and is served for use, a uniaxial stretched film which is formed such that a resin melted by heating in the inside of an extruder is discharged onto a casting roller and, thereafter, is formed by extending the resin in the longitudinal direction, or a biaxial stretched film which is formed such that a resin melted by heating in the inside of an extruder is discharged onto a casting roller and, thereafter, is stretched in the longitudinal direction and in the widthwise direction. In any one of these films, the film which is discharged from the T-die and is extruded onto the casting roller is solidified and formed into a film, wherein due to a property of the melted resin of high viscosity, the film exhibits a thickness at both edge portions thereof larger than a thickness at a center portion thereof. Accordingly, both edge portions are removed by cutting to form a film having a fixed thickness in the widthwise direction. In producing a film having the same resin composition on a mass production basis, a resin of the thick portion removed by cutting is melted by heating in the inside of the extruder to be recycled as a raw material of a film again and hence, the resin is not wasted. In producing multiple kinds of films which differ in resin composition from each other in small lots respectively, however, to use a resin of the thick portion removed by cutting again as a raw material of the film, the resin is used only at the time of forming the same film and this hampers the enhancement of a yield ratio.

As a method for removing both end portions in the width direction of the resin film, for example, a trimming method described in patent document 1 has been proposed. The method is a method which, at the time of extruding and coating a melted resin onto both surfaces of a substrate of a metal plate, clamps resin portions (lug portions) projected from the metal plate in the widthwise direction with endless guide belts before the resin is cooled, tears the lug portions and removes the lug portions. To be used in the method, the resin which contains various kinds of pigments and fillers is used. Accordingly, to make use of the portion removed by cutting as a raw material of the film again, the resin can be used in a limited application and hence, the enhancement of a yield ratio cannot be expected in forming multiple kinds of films in small lots.

As a method for reducing an economical loss of film trimming wastes which cannot be recycled, there has been proposed a method described in patent document 2. This embodiment relates to a film which satisfies high-quality prerequisites such as an electric insulation film formed of a biaxial stretched polypropylene film used in the production of capacitors. In this method, a propylene polymer B is melted by heating in the inside of a first extruder, a propylene polymer A is melted by heating in the inside of a second extruder, and both propylene polymers A, B are extruded together from a flat sheet die. In extruding both propylene polymers A, B, the propylene polymer A is supplied and extruded to both sides of the propylene polymer B and is subjected to biaxial stretching. Thereafter, the propylene polymer A on both sides of the propylene polymer B is removed by cutting. In this manner, by making use of the propylene polymer B which requires high-quality prerequisites as effectively as possible, it is possible to prevent the generation of wastes by film trimming. However, in this method, with respect to properties such as a molecular weight of propylene polymer B, residual ash, a melt flow index or a melting point, it is necessary to make these properties of propylene polymer B to be used conform to these properties of propylene polymer A. Accordingly, the application of the propylene polymer B is limited and hence, the propylene polymer B cannot be used for forming various films made of thermoplastic resin for general use.

As prior-art document information related to the present application, following can be named.
Patent document 1: JP-A-2002-127099
Patent document 2: JP-A-08-336884

### Disclosure of the Invention

### Tasks to be solved by the Invention

It is an object of the present invention to provide a process for producing a nonstretched film made of a thermoplastic resin which is produced on a multiple-kind-product and small-lot system, a process for producing a resin-coated metal plate coated with a thermoplastic resin which is produced on a multiple-kind-product and small-lot system, and a process for producing a nonstretched film made of a thermoplastic resin which is produced on a multiple-kind-product and small-lot system with a high yield ratio.

### Means for Solving the Tasks

A process for producing a nonstretched film according to the present invention for overcoming the above-mentioned drawback is a process for producing a nonstretched film (claim 1) which is characterized in that a thermoplastic resin A to be formed into a nonstretched film and another thermoplastic resin B different from the thermoplastic resin A are respectively melted by heating using extruders separate from each other, the melted thermoplastic resins A and B are supplied to melted-resin-supply tubes which are communicably connected with the respective extruders, holes are formed in both sides of a lower portion of the melted-resin-supply tube for supplying the thermoplastic resin A, the thermoplastic resin A and the thermoplastic resin B which are melted by heating are supplied to a feed block which communicably connects end portions of the melted-resin-supply tubes for supplying the thermoplastic resin B to the holes formed on both sides of the lower portion of the melted-resin-supply tube for supplying the thermoplastic resin A,subsequently,thethermoplastic resin A and the thermoplastic resin B have widths thereof enlarged by a manifold which is communicably connected with the feed block and are extruded onto a casting roller from a die lip of an extruding T-die in a state that the thermoplastic resin B coexists with the thermoplastic resin A on both sides of the thermoplastic resin A thus discharging and extruding the thermoplastic resin A and the thermoplastic resin B onto the casting roller such that the thermoplastic resin B coexists with the heat-melted thermoplastic resin A on both sides of the thermoplastic resin A whereby a nonstretched film in which the thermoplastic resin B coexists with the thermoplastic resin A on both sides of the thermoplastic resin A is formed, and, thereafter, the thermoplastic resin B portions are removed by cutting, wherein the improvement is characterized in that a cross-sectional shape of the holes formed in both sides of the lower portion of the melted-resin-supply tube for supplying the thermoplastic resin A is configured such that an elliptical shape which has a long axis thereof arranged parallel to the flow direction of the heat-melted resin and a short axis thereof arranged perpendicular to the flow direction of the heat-melted resin has an approximately upper half portion thereof closed and a projection is formed on a closed portion whereby a concave-and-convex streak is formed on boundary portions between the thermoplastic resin A to be formed into the nonstretched film and the thermoplastic resin B.
In the process for producing a nonstretched film (claim 1), the concave-and-convex streak which is formed on the boundary portion is detected by a detection means (claim 2) .
Further, in the process for producing a nonstretched film (claim 1 or 2), the nonstretched film is formed such that, in discharging the thermoplastic resin A and the thermoplastic resin B from the extrusion T-die, the thermoplastic resin B is formed only at portions which inevitably have a thickness larger than a thickness of the thermoplastic resin A (claim 3).

Further, a process for producing a resin coated metal plate according to the present invention (claim 4) which is characterized in that a thermoplastic resin A to be applied in a stacked manner to a metal plate by coating and another thermoplastic resin B different from the thermoplastic resin A are respectively melted by heating using extruders separate from each other, the melted thermoplastic resins A and B are supplied to tubes for supplying melted resin which are communicably connected with the respective extruders, holes are formed in both sides of a lower portion of the melted-resin-supply tube for supplying the thermoplastic resin A, the thermoplastic resin A and the thermoplastic resin B which are melted by heating are supplied to a feed block which communicably connects end portions of the melted-resin-supply tubes for supplying the thermoplastic resin B with the holes formed on both sides of the lower portion of the melted-resin-supply tube for supplying the thermoplastic resin A, subsequently, the thermoplastic resin A and the thermoplastic resin B have widths thereof enlarged by a manifold which is communicably connected with the feed block and are discharged and extruded onto the metal plate in a state that the thermoplastic resin B coexists with the thermoplastic resin A on both sides of the thermoplastic resin A and a width of a portion of the thermoplastic resin A is larger than a width of the metal plate thus forming a resin coated metal plate which applies only the thermoplastic resin A by stacking to the metal plate and, thereafter, and resin portions which project to the outside from both edges of the metal plate are removed by cutting, wherein the improvement is characterized in that a cross-sectional shape of the holes formed in both sides of the lower portion of the melted-resin-supply tube for supplying the thermoplastic resin A is configured such that an elliptical shape which has a long axis thereof arranged parallel to the flow direction of the heat-melted resin and a short axis thereof arranged perpendicular to the flow direction of the heat-melted resin has an approximately upper half portion thereof closed and a projection is formed on a closed portion whereby a concave-and-convex streak is formed in boundary portions between the thermoplastic resin A to be formed into the nonstretched film and the thermoplastic resin B.
In the process for producing a resin coated metal film (claim 4), the concave-and-convex streak which is formed on the boundary portion is detected by a detection means (claim 5).
Further, in the process for producing a resin coated metal plate (claim 4 or 5), the nonstretched film is formed such that, in discharging the thermoplastic resin A and the thermoplastic resin B from the extrusion T-die, the thermoplastic resin A and the thermoplastic resin B are extruded onto the metal plate in a state that the thermoplastic resin B which coexists with thermoplastic resin A on both sides of the thermoplastic resin A is formed only at portions which inevitably have a thickness larger than a thickness of the thermoplastic resin A (claim 6).

In an apparatus for producing a nonstretched film according to the present invention which includes an extruder (A1) which melts a thermoplastic resin A to be formed into a nonstretched film by heating, an extruder (B1) which melts another thermoplastic resin B different from the thermoplastic resin A by heating, a melted-resin-supply tube (A2) which is communicably connected with the extruder (A1), tubes (B2) for supplying melted resin which are communicably connected with the extruder (B1), a feed block including two holes B3a and B3b which are formed in both sides of a lower portion of the melted-resin-supply tube (A2) and are communicably connected with the s (B2), and a T-die which includes a manifold and a die lip which is communicably connected with the manifold and is communicably connected with the feed block, a cross-sectional shape of the holes B3a and B3b is configured such that an elliptical shape which has a long axis thereof arranged parallel to the flow direction of the heat-melted resin and a short axis thereof arranged perpendicular to the flow direction of the heat-melted resin has an approximately upper half portion thereof closed and a projection is formed on a closed portion (claim 7).
In the apparatus for producing a nonstretched film (claim 7), the apparatus includes a detection means which detects a concave-and-convex streak which is formed on a boundary portion between the thermoplastic resin A to be formed into the nonstretched film and the thermoplastic resin B discharged in parallel from the T-die (claim 8).

### Brief Explanation of Drawings

[Fig. 1]

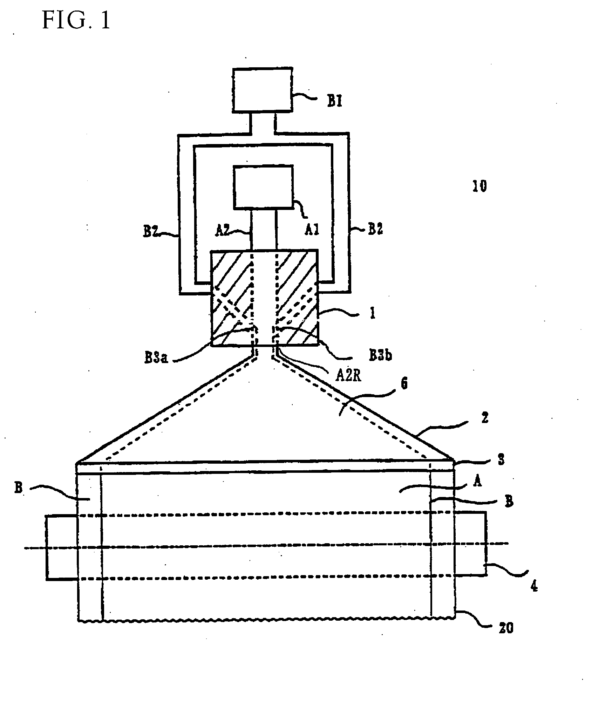

   Fig. 1 is a schematic view showing a process for producing a nonstretched film according to the present invention.
[Fig. 2]

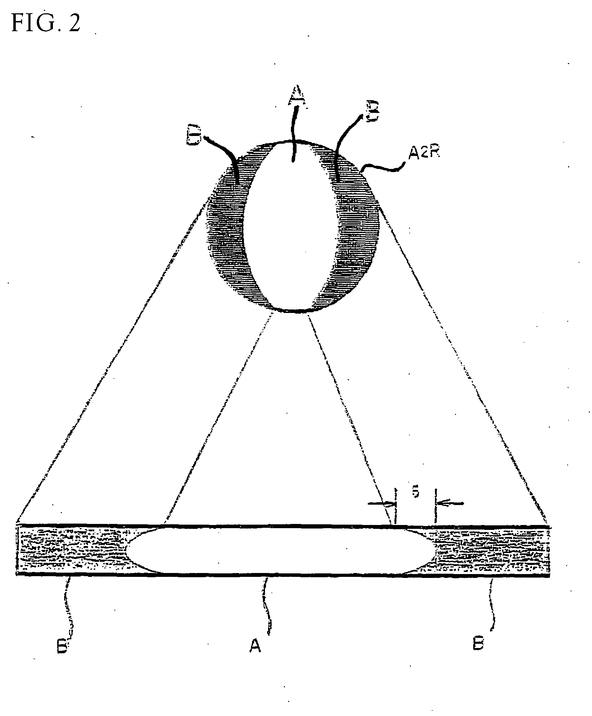

   Fig. 2 is a schematic view showing a state of thermoplastic resins immediately before being extruded to a T-die and a state of the thermoplastic resins formed into a film.
[Fig. 3]

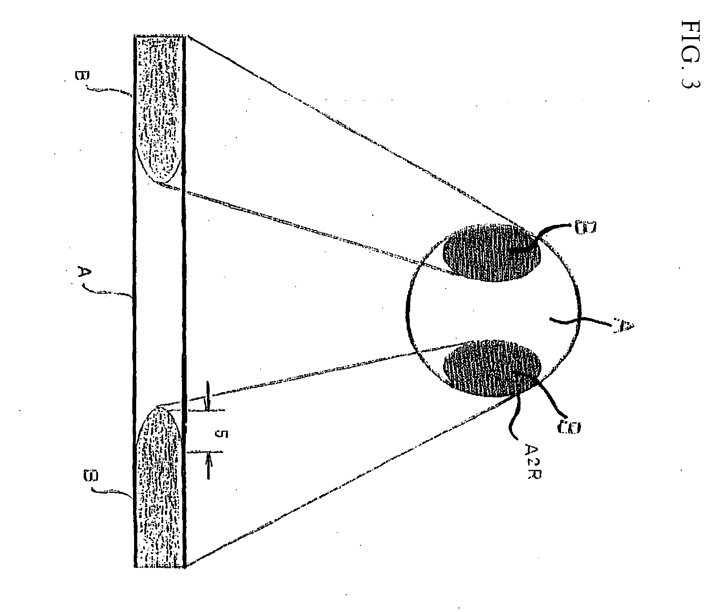

   Fig. 3 is a schematic view showing a state of the thermoplastic resins immediately before being extruded to the T-die and a state of the thermoplastic resins formed into the film.
[Fig. 4]

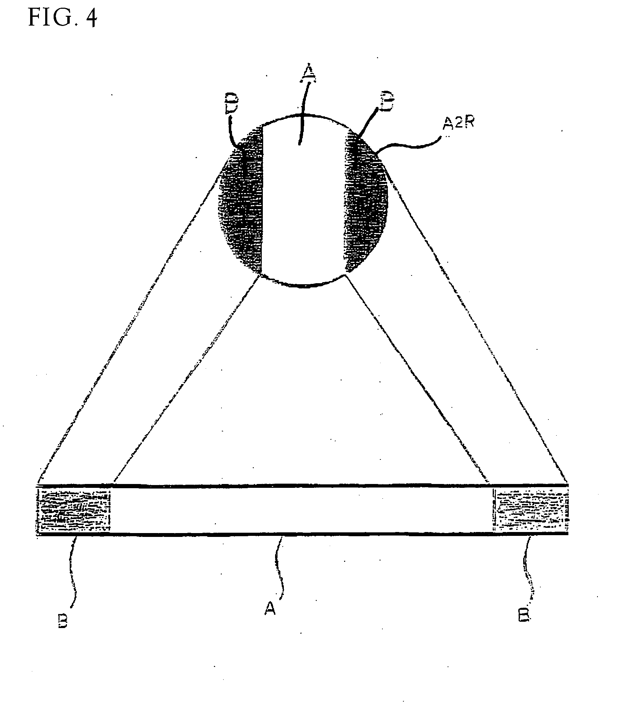

   Fig. 4 is a schematic view showing a state of the thermoplastic resins immediately before being extruded to the T-die and a state of the thermoplastic resins formed into the film.
[Fig. 5]

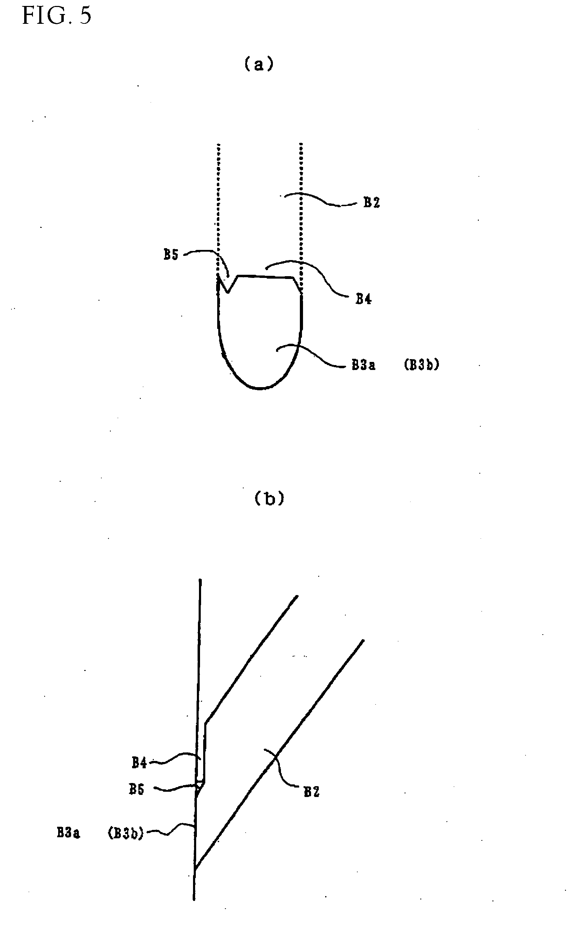

   In Fig. 5, Fig. 5(a) is a cross-sectional view of a hole at a merging portion of a tube for supplying melted resin for a thermoplastic resin A to be formed into the nonstretched film and a tube for supplying melted resin for a thermoplastic resin B different from the thermoplastic resin A. Fig. 5 (b) is a side view of the hole at the merging portion showing a mounting state of a baffle plate.
[Fig. 6]

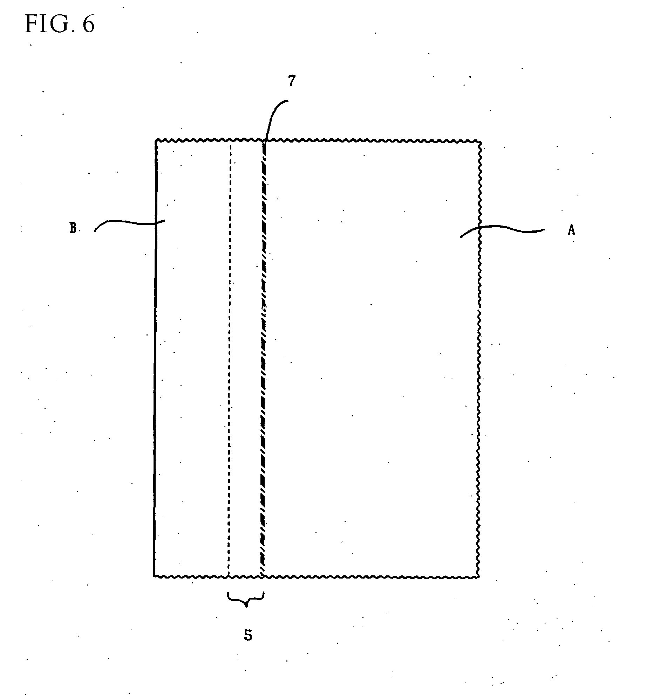

   Fig. 6 is a schematic plan view showing a concave-and-convex streak formed on an overlapping portion (boundary portion) of the thermoplastic resin A to be formed into the nonstretched film and the thermoplastic resin B different from the thermoplastic resin A.
[Fig. 7]

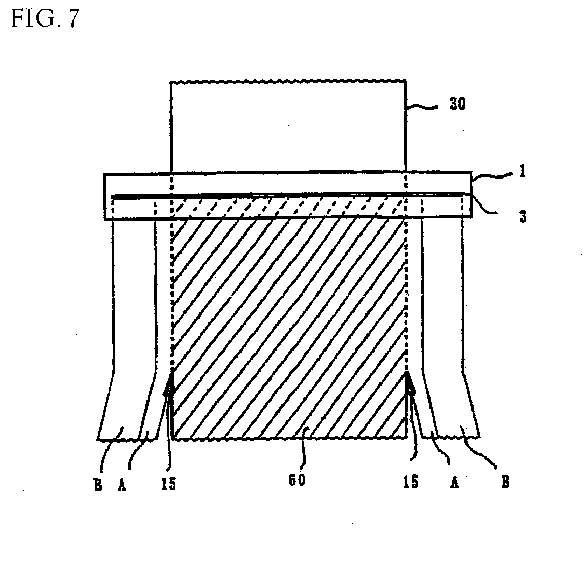

   Fig. 7 is a schematic plan view showing a process for producing a resin-coated metal plate according to the present invention.

In the drawings, numeral 1 indicates a feed block, numeral 2 indicates a T-die, numeral 3 indicates a die lip, numeral 4 indicates a casting (cooling) roller, numeral 5 indicates an overlapping portion (boundary portion), numeral 6 indicates a manifold, numeral 7 indicates concave-and-convex streaks, numeral 10 indicates an apparatus for producing a nonstretched film, numeral 15 indicates a cutting means, numeral 20 indicates a nonstretched film, numeral 30 indicates a metal plate, numeral 60 indicates a resin-coated metal plate, symbols A and B indicate thermoplastic resins, symbol A1 indicates an extruder, symbol A2 indicates a tube for supplying melted resin, symbol A2R indicates a connection portion of the melted-resin-supply tube for supplying melted resin and the T-die, symbol B1 indicates an extruder, symbol B2 indicates a tube for supplying melted resin, symbols B3a and B3b indicate holes, symbol B4 indicates abaffleplate, and symbol B5 indicates a projection.

### Best Mode for carrying out the Invention

Hereinafter, the present invention is explained in detail. It is an object of the present invention to produce the nonstretched film using a producing process according to the present invention such that multiple kinds of films which differ in resin composition from each other are produced in small lots using a small number of processing devices.
As a resin to be formed into the nonstretched film, it is possible to use: a 1-alkene copolymerization resin having 2 to 8 carbon atoms such as low-density polyethylene, medium-density polyethylene, high-density polyethylene, polypropylene, polybutene-1, polypentene-1, polyhexene-1, polyheptene-1 or polyoctene-1; a polyolefin resin essentially consisting of one, two ormore kinds of copolymers selected from an ethylene-propylene copolymer, an ethylene-butene-1 copolymer, an ethylene-hexene copolymer and the like; or a polyamide resin such as 6-nylon, 6, 6-nylon and 6, 10-nylon or the like; or a polyester resin essentially consisting of, as an acid component, one, two or more kinds of acids selected from a therephthalic acid, an isophthalic acid, an orthophthalic acid, a P-β-oxyethoxy benzoic acid, a naphthalene-2, 6-dicarbon acid, a diphenoxyethane-4, 4-dicarbon acid, a dibasic character aromatic dicarboxyl acid such as 5-sodium sulfoisophthalic acid, a hexahydro terephthalic acid, an alicycle group dicarboxylic acid such as cyclohexanedicarboxylic acid, an adipic acid, a sebacic acid, an aliphatic dicarboxylic acid such as a dimmer acid, a trimellitic acid, a pyromellitic acid, a hemimellitic acid, a 1, 1, 2, 2-ethane tetracarboxylic acid, 1, 1, 2-ethane tricarboxylic acid, a 1, 3, 5-pentane tricarboxylic acid, a 1, 2, 3, 4-cyclopentane tetracarboxylic acid, and a polybasic acid such as biphenyl-3, 4, 3', 4'-cyclopentane tetracarboxylic acid, and as one, two or more kinds of alcoholic components selected from ethylene glycol, propylene glycol, 1, 4-butanediol, neopentyl glycol, 1, 6-hexylene glycol, diethylene glycol, triethylene glycol and a diol such as cyclohexane dimethanol, pentaerythritol, glycerol, trimethylolpropane,1, 2, 6-hexane triol, sorbitol and polyalcohol such as 1, 1, 4, 4-tetrakis (hydroxyl methyl) cyclohexane.

Next, a process for forming a film in which another thermoplastic resins B different from one thermoplastic resin A is formed at both end portions of the thermoplastic resin A to be formed into the nonstretched film using a process and an apparatus for producing a nonstretched film according to the present invention is explained. Fig. 1 is a schematic view of an apparatus for producing the nonstretched film 10 according to the present invention. The thermoplastic resin A to be formed into the nonstretched film is melted by heating by the extruder A1 and is supplied to the feed block 1 via the melted-resin-supply tube A2 for the thermoplastic resin A to be formed into the nonstretched film which is communicably connected with the extruder A1. The thermoplastic resin B different from the thermoplastic resin A to be made to coexist on both end portions of the thermoplastic resin A is melted by heating by the extruder B1 and is supplied to the feed block 1 via the melted-resin-supply tube B2 for the thermoplastic resin B which is communicably connected with the extruder B1 and is branched into two tubes at a middle portion thereof. The melted-resin-supply tube A2 for the thermoplastic resin A penetrates the feed block 1 and has a lowermost portion thereof communicably connected with the T-die 2. Further, the holes B3a and B3b are formed in both sides of the lower portion of the melted-resin-supply tube A2 for supplying the thermoplastic A in the feed block 1, and the melted-resin-supply tubes B2 for supplying the thermoplastic B respectively penetrate the feed block 1 and are communicably connected with these holes B3a and B3b.

The thermoplastic resin A which is melted by heating by the extruder A1 is supplied to the feed block 1 via the melted-resin-supply tube A2 and is extruded toward the T-die 2 which is communicably connected with the lowermost portion of the feed block 1. The thermoplastic resin B which is melted by heating by the extruder B1 is supplied to the feed block 1 via the melted-resin-supply tubes B2 and is extruded into the inside of the melted-resin-supply tube A2 from the holes B3a and B3b which are formed in both sides of the lower portion of the melted-resin-supply tube A2 and hence, the thermoplastic resin B coexists with the thermoplastic resin A on both ends of the thermoplastic resin A. Next, widths of the thermoplastic resins are enlarged by the manifold 6 formed in the inside of the T-die 2 and are discharged onto the casting roller 4 which is arranged below the T-die 2 from the die lip 3. Here, the resin film discharged in a molten state has a larger thickness at both end portions thereof in the widthwise direction than other portions thereof. Accordingly, the resin film is formed as the nonstretched film 20 which is formed in a state that the thermoplastic resin B having a film thickness larger than a film thickness of the thermoplastic resin A coexists with the thermoplastic resin A on both ends of the thermoplastic resin A.

In view of easiness in forming at the time of producing the nonstretched film, assuming the melted-resin-supply tube A2 and the melted-resin-supply tube B2 as tubes having a circular cross section respectively, at a lowermost portion of the melted-resin-supply tube A2 arranged immediately before the T-die 2, corresponding to the viscosity difference between the thermoplastic resin A and the thermoplastic resin B, the thermoplastic resin B coexists with the thermoplastic resin A on both end portions of the thermoplastic resin A with cross sections shown in Fig. 2 to Fig. 4. Fig. 2 to Fig. 4 are schematic views showing a state of the thermoplastic resin A and the thermoplastic resin B immediately before the melted resins are extruded into the T-die 2 from the melted-resin-supply tube A2 in the inside of the feed block 1 and the holes B3a and B3b formed in both sides of the lower portion of the melted-resin-supply tube A2 and a state in which the melted thermoplastic resins are discharged from the T-die 2 and are formed into the nonstretched film. An upper part of each drawing is a cross-sectional view showing a state of the thermoplastic resin A and the thermoplastic resin B at the lower portion of the melted-resin-supply tube A2 and a lower part of each drawing shows a state of a cross section of the nonstretched film after the thermoplastic resins are discharged from the T-die 2 and are formed into the nonstretched film.

When a melt viscosity of the thermoplastic resin B different from the thermoplastic resin A to be formed into the nonstretched film is extremely lower than a melt viscosity of the thermoplastic resin A, the thermoplastic resin B coexists with the thermoplastic resin A on both ends of the thermoplastic resin A with a cross-sectional shape shown in the upper part of Fig. 2. In this state, when the thermoplastic resins have widths thereof enlarged by the manifold 6 and are discharged from the die lip 3 of the T-die 2, as shown in the lower part of Fig. 2, the so-called overlapping portions (boundary portions) 5 in which the thermoplastic resin B intrudes into upper and lower portions of end portions of the thermoplastic resin A are formed.

When the melt viscosity of the thermoplastic resin Bdifferent from the thermoplastic resinAis extremely higher than the melt viscosity of the thermoplastic resin A to be formed into the nonstretched film, the thermoplastic resin B coexists with the thermoplastic resin A on both ends of the thermoplastic resin A with a cross-sectional shape shown in the upper part of Fig. 3. In this state, when the thermoplastic resins have the width thereof enlarged by the manifold 6 and are discharged from the die lip 3 of the T-die 2, as shown in the lower part of Fig. 3, the so-called overlapping portions 5 in which the thermoplastic resin A intrudes into upper and lower portions of end portions of the thermoplastic resin B are formed.

Since these overlapping portions (boundary portions) 5 are portions in which the thermoplastic resin A and the thermoplastic resin B overlap each other, these overlapping portions cannot be adopted as a product and hence, it is necessary to remove these overlapping portions. However, when the overlappingportions (boundary portions) 5 are large, portions to be removed become large and hence, a yield ratio of the thermoplastic resin A to be formed into the nonstretched film is lowered. Accordingly, it is necessary to select a combination of the thermoplastic resin A and the thermoplastic resin B so as to minimize the overlapping portions (boundary portions) 5 of the thermoplastic resin A and the thermoplastic resin B. However, since the thermoplastic resin A is a resin to be formed into the nonstretched film, in an actual process, the thermoplastic resin B which is suitable for the thermoplastic resin A is selected. However, in view of resin properties and cost, the selection of the usable thermoplastic resin B is limited. Accordingly, practically, it is required to always form the overlapping portions (boundary portions) 5 having a fixed shape irrespective of the combination of the thermoplastic resin A and the thermoplastic resin B.

The present invention is provided for, as shown in the lower parts of Fig. 2 and Fig. 3, forming the overlapping portions (boundary portions) 5 in which the thermoplastic resin B intrudes into the upper and lower portions of the end portions of the thermoplastic resin A and for confirming distal ends of the overlapping portions with naked eyes or using a detection means. For this end, the cross-sectional shape of the holes B3a and B3b at which the melted-resin-supply tube B2 for the thermoplastic resin B merge with the melted-resin-supply tube A2 for the thermoplastic resin A in the inside of the feed block 1 shown in Fig. 1 is configured such that, as shown in Fig. 5(a), an elliptical shape which has a long axis thereof parallel to the flow direction of the heat-melted resin and a short axis thereof perpendicular to the flow direction of the heat-melted resin has an approximately upper half portion thereof closed and a projection is formed on a closed portion. As shown in Fig. 1, in the inside of the feed block 1, when the melted-resin-supply tubes B2 having a circular cross-section are made to be communicated with the melted-resin-supply tube A2 for the thermoplastic resin A from the oblique direction, the cross-sectional shape of the holes B3a and B3b at merging portions assumes an elliptical shape which has a long axis thereof arranged parallel to the flow direction of the melted resin and a short axis thereof arranged perpendicular to the flow direction of the melted resin. With respect to this elliptical hole cross-section, as shown in Fig. 5(b), a tongue-like baffle plate B4 is provided for closing an approximately upper half portion of the elliptical hole cross-section and, as shown in Fig. 5(a), the hole cross-section has a shape in which a projection B5 is formed on the baffle plate B4. In this manner, by forming the cross-sectional shape of holes B3a and B3b at the merging portion into the shape shown in Fig. 5(a), it is possible to form the overlapping portions (boundary portions) 5 in which the thermoplastic resin B intrudes into the upper and lower portions of the end portions of the thermoplastic resin A as shown in Fig. 2 or the overlapping portions (boundary portions) 5 in which the thermoplastic resin A intrudes into the upper and lower portions of the end portions of the thermoplastic resin B and to form the concave-and-convex streak 7 in the overlapping portions (boundary portion) 5 as shown in Fig. 6.

Further, heaters and temperature sensors are mounted on peripheries of the melted-resin-supply tube A2, the melted-resin-supply tubes B2, the feed block 1, and the manifold 6 of the T-die 2. The heating temperature is adjusted using a temperature adjusting means such that the thermoplastic resin B is heated at a high temperature and the thermoplastic resin A is heated at a low temperature thus adjusting the melt viscosity of the thermoplastic resin A and the melt viscosity of the thermoplastic resin B at the time of allowing the thermoplastic resins A and B to pass through the feed block and the T-die. Accordingly, at the overlapping portions (boundary portions) 5, it is possible to adjust the state in which, as shown in Fig. 2, the thermoplastic resin B intrudes into the upper and lower portions of the end portions of the thermoplastic resin A or the state in which, as shown in Fig. 3, the thermoplastic resin A intrudes into the upper and lower portions of the end portions of the thermoplastic resin B.

Further, to facilitate the confirmation of the concave-and-convex streak 7 formed on the overlapping portions (boundary portions) 5, the detecting means may be provided for detecting the concave-and-convex streak 7. For example, when both the thermoplastic resin A to be formed into the nonstretched film and the thermoplastic resin B different from the thermoplastic resin A are transparent so that it is difficult to recognize the concave-and-convex streak in the overlapping portions (boundary portions) with naked eyes, it is possible to recognize the overlapping portions (boundary portions) using the detection means such as a polarizing filter or a CCD camera. Further, also when both the thermoplastic resin A to be formed into the nonstretched film and the thermoplastic resin B different from the thermoplastic resin A are colored in the same color, it is possible to recognize the overlapping portions (boundary portions) using a CCD camera.

Next, a process for producing a resin-coated metal plate according to the present invention is explained. Fig. 7 is a schematic plan view as viewed from above a metal plate showing a case in which thermoplastic resins A and B are extruded onto the metal plate 30 which continuously advances from above to below in the drawing from a die lip 3 of a T-die 1 in a state that the thermoplastic resin B coexists with the thermoplastic resin A on both ends of the thermoplastic resin A and the thermoplastic resins are applied to the metal plate 30 by coating in a stacked manner. As the T-die 1, a T-die having the die lip 3 whose discharge width is larger than a width of the metal plate 30 is used. A film in a molten state is formed by performing operations similar to the above-mentioned operations for producing the above-mentioned nonstretched film according to the present invention up to a step for discharging the thermoplastic resin A and the thermoplastic resin B from the die lip 3 of the T-die 1. Here, the thermoplastic resins are discharged onto and applied to the metal plate 30 by coating in a stacked manner in a state that the thermoplastic resin B which is inevitably formed with a film thickness larger than the film thickness of the thermoplastic resin A coexists with the thermoplastic resin A on both sides of the thermoplastic resin A and a width of the thermoplastic resin A portion is set larger than a width of the metal plate 30. A hatching portion in the drawing indicates a portion of the metal plate 30 to which the thermoplastic resin A is applied by coating in a stacked manner. In this manner, the metal plate 30 is coated with only the thermoplastic resin A portion in a stacked manner to form a resin-coated metal plate 60 and, thereafter, portions of the thermoplastic resin B and the thermoplastic resin A which project to the outside from both ends of the metal plate 30 are removed by cutting using a cutting means 15 such as a cutter. In this manner, the metal plate 30 is coated over the whole width thereof in a stacked manner with only the thermoplastic resin A to be formed into the nonstretched film having a uniform thickness. Further, by controlling an extruding quantity of the thermoplastic resin A so as to minimize the portions of the thermoplastic resin A which project to the outside from both ends of the metal plate 30, it is possible to produce the resin-coated metal plate substantially without wasting the thermoplastic resin A to be formed into the nonstretched film.

Further, in the same manner as the process for producing the nonstretched film according to the present invention, a concave-and-convex streak which is formed on boundary portions of the thermoplastic resin A and the thermoplastic resin B may be easily detected by providing a detection means such as a polarizing filter or a CCD camera.

Here, as described above, the case in which the thermoplastic resin B different from the thermoplastic resin A to be formed into the nonstretched film in a single layer coexists with the thermoplastic resin A on both ends of the thermoplastic resin A has been explained. However, the technique of the present invention may be also applicable to a process for producing a multi-layered thermoplastic resin using a multi-manifold method. That is, a group made of a plurality of thermoplastic resins A to be formed into the nonstretched film is melted for every thermoplastic resin A by heating separately from each other, a thermoplastic resin B different from the thermoplastic resin A is guided to both sides of the respective thermoplastic resins of the group made of thermoplastic resins A immediately before enlarging widths of the respective thermoplastic resins A by respective manifolds, and the thermoplastic resins A are supplied to the respective multi-manifolds in a state that the thermoplastic resin B different from the thermoplastic resin A coexists with the thermoplastic resin A on both end portions of the respective thermoplastic resins A to allow a width thereof enlarged and, next, are merged with thermoplastic resins A and, thereafter, the thermoplastic resins A are discharged onto a casting roller from a die lip of a T-die and are formed as a multi-layered nonstretched film. Thereafter, portions of the thermoplastic resins B which are coated with the group of thermoplastic resins A can be removed by cutting. Embodiments

Hereinafter, the present invention is explained in further detail in conjunction with embodiments.

### (Embodiment 1)

As the thermoplastic resin A to be formed into the nonstretched film, a polyester resin (ethylene terephthalate/ethylene isophthalate copolymer (10 molecular% of ethylene isophthalate), ameltingpoint: 220°C) is melted by heating at 260°C using the extruder A1. As the thermoplastic resin B to be made to coexist on both end portions of the thermoplastic resin A, a resin produced by adding 25 weight% of TiO₂ as a coloring component to low density polyethylene (melting point: 145°C) is melted by heating at 200°C using the extruder B1. Next, the thermoplastic resin A which is melted by heating is supplied from the extruder A1 to the feed block 1 via one melted-resin-supply tube A2 which is heated at 260°C using the neighboring heater, and the thermoplastic resin B which is melted by heating is supplied from the extruder B1 to the feed block 1 via two melted-resin-supply tubes B2 which are respectively heated at 200°C using the neighboring heaters. The melted-resin-supply tube A2 penetrates the center in the inside of the feed block 1. The melted-resin-supply tubes B2 are communicably connected with both sides of the lower portion of the melted-resin-supply tube A2 from above obliquely at an angle of 50° with respect to the resin supplying direction of the melted-resin-supply tube A2. The thermoplastic resin B is extruded into the inside of the melted-resin-supply tube A2 from the holes B3a and B3b which are formed in the merging portion, and have an elliptical shape which arranges a long axis thereof parallel to the flow direction of the heat-melted resin and a short axis thereof perpendicular to the flow direction of the heat-melted resin and has an approximately upper half portion thereof closed and has a projection formed on a closed portion thereof thus allowing the thermoplastic resin B to coexist with the thermoplastic resin A on both ends of the thermoplasticresin A. Next, the widths of the thermoplastic resins are enlarged by the manifold 6 formed in the inside of the T-die 2 such that the width of the thermoplastic resin A portion after forming the film assumes approximately 80cm and the width of the thermoplastic resin B portions in which the thermoplastic resin B intrudes into upper and lower portions of both ends of the thermoplastic resin A with the overlapping portion having a width of approximately 2cm are respectively set to approximately 10cm. Then, from the die lip 3 arranged below the T-die 2, the thermoplastic resins are made to fall onto the casting roller (cooling roller) 4 which is continuously rotated via an arbitrary roller thus solidifying the thermoplastic resins by cooling to form a resin film having a width of approximately 1m. In the film formed in such a manner, the overlapping portions (boundary portions) 5 in which the thermoplastic resin B intrudes into the upper and lower portions of the end portion of the thermoplastic resin A are formed as shown in Fig. 2 and hence, it is possible to form the nonstretched film while preventing the wrapping of the thermoplastic resin B around the auxiliary roller by adhesion. Further, the concave-and-convex streak which is formed in the overlapping portions 5 (boundary portions) is detected using a CCD camera. Next, the overlapping portions (boundary portions) 5 of the thermoplastic resin B coated with the thermoplastic resin A is removed by cutting using a cutter in a state that the overlapping portions 5 slightly include a portion made of only thermoplastic resin A, and the film is wound around a coiler as a nonstretched resin film made of only the thermoplastic resin A having a width of 75cm.

### (Embodiment 2)

In the apparatus for producing the resin film according to the embodiment 1, in place of the cooling roller 4, as a metal plate, a zinc-coated (galvanized) steel sheet having a thickness of 0.3mm and a width of 75cm which is unwound from an uncoiler and is continuously supplied is allowed to pass through a line. A thermoplastic resin A and a thermoplastic resin B similar to the thermoplastic resin A and the thermoplastic resin B in the embodiment 1 are melted by heating in the same manner as the embodiment 1 and discharged onto the zinc-coated steel sheet in a stacked manner from the die lip 3 arranged below the T-die 2 in a state that the thermoplastic resin B coexists with the thermoplastic resin A on both ends of the thermoplastic resin A. It is confirmed that the thermoplastic resin discharged in such a manner is a thermoplastic resin having a total length of approximately 1m in which a width of the thermoplastic resin B portions is approximately 10cm and a width of the overlapping portions (boundary portions) of the thermoplastic resins B which are formed by the intrusion of the thermoplastic resin B into upper and lower portions of the thermoplastic resin A is 2cm by detecting the concave-and-convex streaks using a CCD camera. That is, the overlapping portion of the thermoplastic resin A and the thermoplastic resin B and the thermoplastic resin B project from both ends of the zinc-coated steel sheet in the width direction and hence, the projected resin portions are removed by cutting by a cutter, and the zinc-coated steel sheet is wound around the coiler as a resin-coated zinc-coated steel sheet which is formed by coating whole surface of zinc-coated steel sheet with the thermoplastic resin A in a stacked manner.

### Industrial Applicability

The process for producing the nonstretched film according to the present invention is a process for producing the nonstretched film in which the thermoplastic resins are melted by heating, are discharged from the extruding T die and are extruded onto the casting roller to form the nonstretched film, wherein, the thermoplastic resin A to be formed into the nonstretched film and the thermoplastic resin B different from the thermoplastic resin A are separately melted by heating, are guided to both end portions of the extruding T die and are discharged and extruded onto the casting roller such that the thermoplastic resin B different from the thermoplastic resin A coexists with the heat-melted thermoplastic resin A on both sides of the thermoplastic resin A thus forming the nonstretched film in which the thermoplastic resin B different from the thermoplastic resin A coexists with the thermoplastic resin A on both side of the heat-melted thermoplastic resin A. Here, the thermoplastic resin A to be formed into the nonstretched film and the thermoplastic resin B different from the thermoplastic resin A are melted by heating using extruders separate from each other, are supplied to the melted-resin-supply tubes which are communicably connected to the respective extruders. The holes having the elliptical cross-sectional shape which arranges the long axis thereof parallel to the flow direction of the heat-melted resin and the short axis thereof perpendicular to the flow direction of the heat-melted resin and have an approximately upper half portion thereof closed and form the projection on the closed portion are formed in both sides of the lower portion of the melted-resin-supply tube for supplying the thermoplastic resin A. The thermoplastic resin A to be formed into the nonstretched film and the thermoplastic resin B different from the thermoplastic resin A which are melted by heating are supplied to the feed block which is formed by communicably connecting the end portions of the melted-resin-supply tubes for supplying the thermoplastic resin B different from the thermoplastic resin A with the holes formed in both sides of the lower portion of the melted-resin-supply tube for supplying the thermoplastic resin A. Next, the widths of the heat-melted resins are enlarged by the manifold which is communicably connected to the feed block, and the heat-melted resins are extruded onto the casting roller from the die lip of the extruding T-die in a state that the thermoplastic resin B different from the thermoplastic resin A coexists with the thermoplastic resin A on both sides of the thermoplastic resin A. Accordingly, the so-called overlapping portions (boundary portions) in which the thermoplastic resin B different from the thermoplastic resin A intrudes into the upper and lower portions of the end portions of the thermoplastic resin A to be formed into the nonstretched film are formed and the concave-and-convex streak is formed on the boundary portion.

When the overlapping portions (boundary portions) are formed in this manner, after the melted resins are extruded on the casting roller, at the time of removing the thermoplastic resin B portions different from the thermoplastic resin A which inevitably have the thickness larger than the thickness of the thermoplastic resin A to be formed into the nonstretched film and are coated with the thermoplastic resin A to be formed into the nonstretched film by cutting, the thermoplastic resin B portions coated with the thermoplastic resin A are removed by cutting in a state that the thermoplastic resin B portions include the overlapping portions (boundary portions). Accordingly, it is possible to minimize the removing quantity of the thermoplastic resin to be formed into the nonstretched film. Further, since the concave-and-convex streak is formed on the overlapping portions (boundary portions), it is possible to recognize the overlapping portions (boundary portions) with naked eyes. Further, when both the thermoplastic resin A to be formed into the nonstretched film and the thermoplastic resin B different from the thermoplastic resin A are transparent so that it is difficult to recognize the concave-and-convex streak in the overlapping portions (boundary portions) with naked eyes, it is possible to recognize the overlapping portions (boundary portions) using a detection means such as a polarizing filter or a CCD camera. Further, also when both the thermoplastic resin A to be formed into the nonstretched film and the thermoplastic resin B different from the thermoplastic resin A are colored in the same color, it is possible to recognize the overlapping portions (boundary portions) using a CCD camera. Accordingly, it is possible to remove an undesired portion by cutting while hardly removing the thermoplastic resin A portion to be formed into the nonstretched film. In this manner, it is possible to produce the nonstretched film which is made of the thermoplastic resin A and is provided for producing films which differ in resin composition from each other and are produced in a small-lot system with a high yield ratio.

Further, in the process for producing the resin-coated metal plate according to the present invention, the thermoplastic resin A to be coated on the metal plate in a stacked manner and the thermoplastic resin B different from the thermoplastic resin A are separately melted by heating and are guided to both end portions of the extruding T-die and are allowed to coexist on both sides of the heat-melted thermoplastic resin A to be coated on the metal plate, and the melted thermoplastic resins are discharged onto the metal plate in a state that the width of the thermoplastic resin portion is larger than the width of the metal plate to form the resin-coated metal plate formed by coating the metal plate only with thermoplastic resin A portion in a stacked manner. In the above-mentioned process for producing the nonstretched film, the thermoplastic resins are extruded in a state that the thermoplastic resin B portions which is different from the thermoplastic resin A and is inevitably formed to have a film thickness larger than a film thickness of the thermoplastic resin A to be coated on the metal plate is coated with the thermoplastic resin A to be coated on the metal plate project to the outside from both ends of the metal plate, and the thermoplastic resins coat the metal plate and, thereafter, the projected thermoplastic resin B portions different from the thermoplastic resin A and including the overlapping portion are removed by cutting and hence, the whole surface of the metal plate is coated with the thermoplastic resin A while minimizing the removing quantity of the thermoplastic resin A to be coated on the metal plate, whereby it is possible to produce the resin-coated metal plate while hardly wasting the thermoplastic resin A to be coated on the metal plate.

Further, the apparatus for producing the nonstretched film according to the present invention is an apparatus for producing the nonstretched film which includes the extruder (A1) which melts the thermoplastic resin A to be coated on the metal plate by heating, the extruder (B1) which melts the thermoplastic resin B different from the thermoplastic resin A by heating, the melted-resin-supply tube for supplying melted resin (A2) which is communicably connected with the extruder (A1), the melted-resin-supply tubes for supplying melted resin (B2) which are communicably connected with the extruder (B1), the feed block including two holes B3a and B3b which are formed in both sides of the lower portion of the melted-resin-supply tube for supplying melted resin (A2) and are communicably connected to the melted-resin-supply tube for supplying melted resin (B2), and the T-die including the manifold and the die lip which is communicably connected to the manifold and is communicably connected with the feed block. A cross-sectional shape of the holes is formed in an elliptical shape which arranges the long axis thereof parallel to the flow direction of the heat-melted resin and the short axis thereof arranged perpendicular to the flow direction of the heat-melted resin has an approximately upper half portion thereof closed and the projection is formed on the closed portion whereby, when the thermoplastic resins are extruded onto the casting roller from the die lip of the extruding T-die in a state that the thermoplastic resin B different from the thermoplastic resin A to be formed into the nonstretched film coexists with the thermoplastic resin A on both sides of the thermoplastic resin A to be formed into the nonstretched film, so-called overlapping portions (boundary portions) in which the thermoplastic resin B different from the thermoplastic resin A intrudes into the upper and lower portions of the end portions of the thermoplastic resin A to be formed into the nonstretched film are formed. Accordingly, after the thermoplastic resins are extruded onto the casting roller, at the time of removing the thermoplastic resin B portions different from the thermoplastic resin A which are inevitably has a thickness larger than a thickness of the thermoplastic resin A to be formed into the nonstretched film and are coated with the thermoplastic resin A to be formed into the nonstretched film by cutting, the thermoplastic resin B portions is removed by cutting in a state that the thermoplastic resin B portions include the overlapping portions (boundary portions). Accordingly, it is possible to minimize the removing quantity of the thermoplastic resin A to be formed into the nonstretched film. Further, since the concave-and-convex streak is formed on the overlapping portions (boundary portions), it is possible to recognize the overlapping portions (boundary portions) by naked eyes. Further, when both of the thermoplastic resin A to be formed into the nonstretched film and the thermoplastic resin B different from the thermoplastic resin A are transparent so that it is difficult to recognize the concave-and-convex streak in the overlapping portions (boundary portions) by naked eyes, it is possible to recognize the overlapping portions (boundary portions) using the detection means such as the polarizing filter or the CCD camera. Further, also when both the thermoplastic resin A to be formed into the nonstretched film and the thermoplastic resin B different from the thermoplastic resin A are colored in the same color, it is possible to recognize the overlapping portions (boundary portions) using the CCD camera. Accordingly, it is possible to remove the undesired portion by cutting while hardly removing the thermoplastic resin Aportion to be formed into the nonstretched film, and it is possible to produce the nonstretched film made of the thermoplastic resin A to be formed into the nonstretched film with a high yield ratio.

## Claims

1. A process for producing a nonstretched film being **characterized in that**
a thermoplastic resin A to be formed into a nonstretched film and another thermoplastic resin B different from the thermoplastic resin A are respectively melted by heating using extruders separate from each other,
the melted thermoplastic resins A and B are supplied to melted-resin-supply tubes which are communicably connected with the respective extruders,
holes are formed in both sides of a lower portion of themelted-resin-supply tube for supplying the thermoplastic resin A,
the thermoplastic resin A and the thermoplastic resin B which are melted by heating are supplied to a feed block which communicably connects end portions of the melted-resin-supply tubes for supplying the thermoplastic resin B to the holes formed on both sides of the lower portion of the melted-resin-supply tube for supplying the thermoplastic resin A, subsequently,
the thermoplastic resin A and the thermoplastic resin B have widths thereof enlarged by a manifold which is communicably connected with the feed block and are extruded onto a casting roller from a die lip of an extruding T-die in a state that the thermoplastic resin B coexists with the thermoplastic resin A on both sides of the thermoplastic resin A thus discharging and extruding the thermoplastic resin A and the thermoplastic resin B onto the casting roller such that the thermoplastic resin B coexists with the heat-melted thermoplastic resin A on both sides of the thermoplastic resin A whereby a nonstretched film in which the thermoplastic resin B coexists with the thermoplastic resin A on both sides of the thermoplastic resin A is formed, and, thereafter,
the thermoplastic resin B portions are removed by cutting, wherein
the improvement being **characterized in that** a cross-sectional shape of the holes formed in both sides of the lower portion of the melted-resin-supply tube for supplying the thermoplastic resin A is configured such that an elliptical shape which has a long axis thereof arranged parallel to the flow direction of the heat-melted resin and a short axis thereof arranged perpendicular to the flow direction of the heat-melted resin has an approximately upper half portion thereof closed and a projection is formed on a closed portion whereby a concave-and-convex streak is formed on boundary portions between the thermoplastic resin A to be formed into the nonstretched film and the thermoplastic resin B.

2. A process for producing a nonstretched film according to claim 1, wherein the concave-and-convex streak which is formed on the boundary portion is detected by a detection means.

3. A process for producing a nonstretched film wherein the nonstretched film is formed such that, in discharging the thermoplastic resin A and the thermoplastic resin B from the extrusion T-die, the thermoplastic resin B is formed only at portions which inevitably have a thickness larger than a thickness of the thermoplastic resin A.

4. A process for producing a resin coated metal plate being **characterized in that**
a thermoplastic resin A to be applied to a metal plate by coating and another thermoplastic resin B different from the thermoplastic resin A are respectively melted by heating using extruders separate from each other,
the melted thermoplastic resins A and B are supplied to melted-resin-supply tubes for supplying melted resin which are communicably connected with the respective extruders,
holes are formed in both sides of a lower portion of the melted-resin-supply tube for supplying the thermoplastic resin A,
the thermoplastic resin A and the thermoplastic resin B which are melted by heating are supplied to a feed block which communicably connects end portions of the melted-resin-supply tubes for supplying the thermoplastic resin B with the holes formed on both sides of the lower portion of the melted-resin-supply tube for supplying the thermoplastic resin A, subsequently,
the thermoplastic resin A and the thermoplastic resin B have widths thereof enlarged by a manifold which is communicably connected with the feed block and are discharged and extruded onto the metal plate in a state that the thermoplastic resin B coexists with the thermoplastic resin A on both sides of the thermoplastic resin A and a width of a portion of the thermoplastic resin A is larger than a width of the metal plate thus forming a resin coated metal plate which applies only the thermoplastic resin A by stacking to the metal plate and, thereafter, and
resin portions which project to the outside from both edges of the metal plate are removed by cutting, wherein
the improvement being **characterized in that** a cross-sectional shape of the holes formed in both sides of the lower portion of the melted-resin-supply tube for supplying the thermoplastic resin A is configured such that an elliptical shape which has a long axis thereof arranged parallel to the flow direction of the heat-melted resin and a short axis thereof arranged perpendicular to the flow direction of the heat-melted resin has an approximately upper half portion thereof closed and a projection is formed on a closed portion whereby a concave-and-convex streak is formed in boundary portions between the thermoplastic resin A to be formed into the nonstretched film and the thermoplastic resin B.

5. A process for producing a resin coated metal film according to claim 4, wherein the concave-and-convex streak which is formed on the boundary portion is detected by a detection means.

6. A process for producing a resin coated metal film according to claim 4 or 5, wherein in discharging the thermoplastic resin A and the thermoplastic resin B from the extrusion T-die, the thermoplastic resin A and the thermoplastic resin B are extruded onto the metal plate in a state that the thermoplastic resin B which coexists with thermoplastic resin A on both sides of the thermoplastic resin A is formed only at portions which inevitably have a thickness larger than a thickness of the thermoplastic resin A.

7. An apparatus for producing a nonstretched film comprising:
an extruder (A1) which melts a thermoplastic resin A to be formed into a nonstretched film by heating;
an extruder (B1) which melts another thermoplastic resin B different from the thermoplastic resin A by heating;
a tube (A2) for supplying melted resin which is communicably connected with the extruder (A1);
tubes (B2) for supplying melted resin which are communicably connected with the extruder (B1);
a feed block including two holes B3a and B3b which are formed in both sides of a lower portion of the melted-resin-supplytube (A2) and are communicably connected with the melted-resin-supply tubes (B2); and
a T-die which includes a manifold and a die lip which is communicably connected with the manifold and is communicably connected with the feed block, wherein
a cross-sectional shape of the holes B3a and B3b is configured such that an elliptical shape which has a long axis thereof arranged parallel to the flow direction of the heat-melted resin and a short axis thereof arranged perpendicular to the flow direction of the heat-melted resin has an approximately upper half portion thereof closed and a projection is formed on a closed portion.

8. An apparatus for producing a nonstretched film according to claim 7, wherein the apparatus includes a detection means which detects a concave-and-convex streak which is formed on a boundary portion between the thermoplastic resin A to be formed into the nonstretched film and the thermoplastic resin B discharged in parallel from the T-die.
